# FASCICULE DE BREVET EUROPEEN

(11) **EP 1 012 522 B1**
(45) Date de publication et mention de la délivrance du brevet: **07.04.2004**
(21) Numéro de dépôt: 97944949.3
(22) Date de dépôt: 10.10.1997
(51) Int. Cl.: F28D 9/00, B23K 26/10

(54) **ECHANGEUR DE CHALEUR, ET FAISCEAU D'ECHANGE DE CHALEUR, AINSI QUE PROCEDES DE SOUDAGE ET DE REALISATION S'Y RAPPORTANT**
WÄRMETAUSCHERBÜNDEL UND VERFAHREN ZU DESSEN VERSCHWEISSUNG UND HERSTELLUNG
HEAT EXCHANGER, AND HEAT EXCHANGING BEAM, AND RELATED WELDING METHODS AND PRODUCTION

(30) Priorité: 11.10.1996 FR 9612468
(43) Date de publication de la demande: 28.06.2000
(73) Titulaire: Ziepack, 92400 Courbevoie (FR)
(72) Inventeur: CLAUDEL, Michel, F-57400 Sarrebourg (FR); FAUCONNIER, Jean-Claude, F-75017 Paris (FR); GUIDAT, Roland, F-54000 Nancy (FR)
(74) Mandataire: Pontet, Bernard
(86) Numéro de dépôt international: PCT/FR1997/001803
(87) Numéro de publication internationale: WO 1998/016786

(56) Documents cités:
- EP-A- 0 460 872
- EP-A- 0 472 850
- FR-A- 2 680 566
- US-A- 4 665 975
- PATENT ABSTRACTS OF JAPAN vol. 007, no. 240 (M-251), 25 octobre 1983 & JP 58 128236 A (RIKEN KK), 30 juillet 1983, cité dans la demande

## Description

La présente invention concerne un faisceau d'échange de chaleur destiné à constituer la partie thermiquement active d'un échangeur de chaleur.

La présente invention concerne aussi un procédé pour souder ensemble deux tôles au moyen de cordons de soudure.

La présente invention concerne également un procédé pour réaliser un module bi-plaques élémentaire pour un faisceau d'échange de chaleur.

La présente invention concerne encore un échangeur de chaleur incorportant le faisceau d'échange de chaleur.

On peut schématiquement distinguer deux catégories d'échangeurs industriels:
- les échangeurs à tubes et calandre,
- les échangeurs à plaques.

Les échangeurs à tubes et calandre sont les plus répandus aujourd'hui. Ils consistent en un faisceau de tubes parallèles dans lesquels circule un premier fluide d'échange, et en des moyens pour faire circuler le second fluide d'échange plusieurs fois de suite transversalement à travers des régions du faisceau qui sont successivement plus proches de l'entrée du premier fluide. Ces échangeurs sont universellement connus, et leur emploi depuis plus d'un siècle dans l'industrie à démontré leur fiabilité. Les méthodes de fabrication sont elles aussi connues, et accessibles à d'innombrables sociétés dans le monde. Ils sont relativement faciles à nettoyer, ce qui permet de les utiliser avec des fluides encrassants.

Ils sont par contre lourds et encombrants ce qui grève leur coût d'installation.

Du point de vue de l'échange thermique, le profil défini par l'intérieur des tubes est le profil présentant les meilleures performances thermiques et hydrodynamiques. En effet, le rapport coefficient d'échange/perte de charge est meilleur que n'importe quel autre profil, pour des vitesses de circulation élevées, et des fluides ayant une faible viscosité (cas général des gaz).

Malheureusement, ces remarquables performances sont contrebalancées par une médiocre efficacité en ce qui concerne le fluide circulant à l'extérieur des tubes. Celui-ci doit effectuer de nombreux changements de direction tout au long de son passage dans l'échangeur, afin de transformer son circuit transversal au sens de l'écoulement dans les tubes en une circulation en "pseudo" contre-courant. Lesdits changements de sens engendrent des pertes de charge importantes sans amélioration de l'échange thermique, et créent des zones mortes où la circulation du fluide est quasi-nulle, ce qui diminue d'une manière importante la surface servant effectivement à l'échange thermique.

De ce fait, les performances thermiques et hydrauliques des échangeurs à tubes et calandre sont globalement relativement modestes.

Les échangeurs à plaques sont apparus plus récemment sur le marché de l'échangeur (après la seconde guerre mondiale). Ils ont fait une percée importante notamment dans le secteur de l'agro-alimentaire, sous la forme d'un assemblage de plaques, rendu étanche par des joints souples, qui permet un démontage aisé, et un nettoyage rapide. Cette propriété permet en effet de résoudre les problèmes de contamination bactérienne, très présents en agro-alimentaire.

Que ce soit sous la forme d'échangeurs à plaques et joints, ou sous la forme d'échangeurs à plaques soudées, ils sont plus légers que les échangeurs à tubes et calandre, et particulièrement compacts. Cette compacité provient généralement du faible espace entre deux plaques consécutives, qui conduit à un diamètre hydraulique lui aussi très faible. On sait en effet que, à performances égales, la longueur d'un échangeur est proportionnelle à son diamètre hydraulique: plus ce dernier est faible, plus la longueur de l'échangeur sera petite.

Pour des raisons principalement mécaniques, les plaques ont le plus souvent des ondulations en zigzag ("herring bones") consistant en des parties droites de quelques centimètres, suivies d'un changement de direction, comme l'illustre le GB-A-798 535.

Ce profil est particulièrement performant lorsque les vitesses de circulation sont faibles, et que la viscosité des fluides est relativement importante (cas des liquides).

Par contre, ce profil est moins bien adapté thermiquement au cas des gaz.

L'idéal serait de pouvoir réaliser un échangeur alliant à la fois les propriétés de compacité et de légèreté des échangeurs à plaques, et les bonnes performances thermiques et hydrauliques du profil tubulaire intérieur.

Le US-A-4 029 146 propose des échangeurs de chaleur constitués par des plaques à ondulations rectilignes longitudinales assemblées deux par deux pour former des modules individuels définissant à leur intérieur des conduits longitudinaux dans lesquels circule un premier fluide d'échange. Ces modules sont groupés en un faisceau. Le second fluide circule dans des intervalles ménagés par des cales entre les modules. Le trajet du second fluide est peu approprié, que ce soit du point de vue des échanges thermiques ou de celui des pertes de charge.

Le JP-A-58 128 236 décrit un procédé pour fabriquer un module thermique par soudage et hydroformage. Pour cela, on soude deux tôles métalliques l'une à l'autre selon des lignes longitudinales parallèles entre elles ainsi que par un cordon de soudure périphérique interrompu en deux angles opposés du module pour l'entrée et la sortie du fluide. On introduit ensuite entre les deux tôles un fluide sous pression qui déforme la structure par gonflement entre les cordons de soudure de manière à définir d'une part des canaux longitudinaux entre les cordons longitudinaux et d'autre part des collecteurs d'extrémité le long des côtés transversaux, à chaque extrémité des canaux longitudinaux. Pour maîtriser le gonflement du module lors de la phase d'hydroformage, on place le module entre deux surfaces fixes qui limitent l'expansion du module dans le sens de l'épaisseur. Un tel module pose des problèmes de réalisation et d'efficacité en fonctionnement. L'une des constatations qui est à la base de la présente invention est que l'hydroformage ne donne des résultats industriellement acceptables que si les formes que l'on cherche à obtenir correspondent à des modes de déformation compatibles entre eux, d'une région à l'autre de la pièce. En particulier, la pièce ne peut pas gonfler sans que sa largeur globale diminue. Or les parties transversales de la soudure périphérique du JP-A-58 128 236 constituent un renfort qui s'oppose à une telle déformation, au moins dans les zones proches des extrémités des canaux longitudinaux. De même, les collecteurs transversaux prennent lors de l'hydroformage un profil général tubulaire qui se comporte également comme un puissant raidisseur transversal. En outre, les entrées et sorties de fluide par les angles du module conduisent à une répartition inéquitable du fluide dans les différents conduits longitudinaux.

La réalisation de cordons de soudure longitudinaux pose des problèmes car les tôles tendent à se déformer et se décoller l'une de l'autre pendant le soudage sous l'effet des contraintes thermiques. Ceci est vrai même avec le procédé de soudage au laser, bien qu'il mette en oeuvre une moins grande densité d'énergie.

Certes, le FR-A-2 685 462 propose de limiter le soudage du module à des points de contact répartis sur la surface. Mais la structure ainsi obtenue est peu efficace sur le plan hydrodynamique et thermique. Le procédé indiqué pour aménager en platine les extrémités du faisceau, par la formation de rebords coudés sur chaque tôle, est complexe. Le pliage de zones non-planes de la tôle pose des problèmes de réalisation.

Une zone de répartition pour un faisceau d'échange est généralement connue du US-A-4 665 975.

Le but de la présente invention est ainsi de proposer un faisceau d'échange, un échangeur de chaleur et des procédés de réalisation qui permettent de réaliser un échangeur de chaleur qui soit optimisé sur le plan des échanges fluidiques et thermiques sans entraîner de difficultés particulières pour sa réalisation industrielle.

Suivant un premier aspect de l'invention, le faisceau d'échange de chaleur comprenant des modules comprenant chacun deux tôles soudées selon des lignes longitudinales définissant entre elles des premiers passages, de forme sensiblement tubulaire, pour un premier fluide d'échange, ces modules étant positionnés les uns par rapport aux autres de façon à définir entre les modules des seconds passages pour un second fluide d'échange, le faisceau comprenant des moyens répartiteurs pour répartiteurs pour répartir le premier fluide dans les premiers passages et le second fluide dans les seconds passages, caractérisé en ce que les modules sont positionnés de façon que les crêtes externes des ondulations des modules voisins soient sensiblement en contact mutuel, en ce que les modules comprennent à l'une au moins des extrémités du faisceau une zone de transition définissant des premiers passages de transition par lesquels les premiers passages sensiblement tubulaires communiquent avec un orifice terminal du module, et en ce que les zones de transition des modules voisins forment entre elles, en tant que moyens répartiteurs pour le second fluide, des seconds passages de transition par lesquels des seconds passages sensiblement tubulaires, formés pour le second fluide entre les lignes de contact ou quasi-contact des crêtes extérieures des ondulations des modules adjacents, communiquent entre eux et avec l'extérieur du faisceau.

De préférence, la zone de transition présente selon la largeur du module une dimension progressivement rétrécie depuis la zone ondulée où se trouvent les lignes longitudinales de soudure au laser jusqu'à une extrémité ouverte du module.

Cette zone de transition a un double rôle. En fonctionnement, elle permet une répartition équitable du premier fluide dans les conduits longitudinaux de chaque module. Lors de la fabrication, elle permet une transition entre la zone des conduits longitudinaux où la largeur des modules est nettement réduite par rapport à la largeur initiale des tôles à l'emplacement considéré, et l'extrémité des modules où la largeur de ceux-ci peut être très voisine de la largeur initiale des tôles à l'emplacement considéré.

Il est très avantageux de prévoir dans le passage de transition, des points de contact soudés entre les deux tôles. Ces points permettent de mieux maîtriser la déformation des tôles pendant le formage et en particulier la variation de leur largeur totale en chaque point de la longueur de la zone de transition, et favorise d'autre part la bonne répartition du fluide entre les conduits longitudinaux.

Les moyens répartiteurs peuvent encore comprendre, à l'une au moins des extrémités des modules :
une plaque d'extrémité, appartenant également aux moyens de positionnement, traversée par des ouvertures dans chacune desquelles est fixée de manière étanche un orifice terminal de l'un respectif des modules ; et
une boite de raccordement, fixée à la plaque de façon que l'intérieur de la boîte communique avec les premiers passages à travers les ouvertures de la plaque.

Cette plaque ne pose pas de difficultés particulières de mise en place. Les orifices terminaux des modules donnent accès aux passages de transition précédemment discutés. Dans ce cas la plaque peut avoir dans le sens de la largeur des modules une dimension moindre que les modules, ce qui permet l'accès aux seconds passages, destinés au second fluide , de part et d'autre de la plaque.

La distance entre les lignes de soudage longitudinales voisines peut être inférieure ou sensiblement égale à 30mm.

Il a été trouvé selon l'invention qu'un tel écartement, étonnamment petit, permet de réaliser dans de bonnes conditions, par soudage au laser et hydroformage, un module dont les déformations peuvent être parfaitement maîtrisées pendant la fabrication et qui offre en pratique une bonne résistance mécanique même si les tôles sont très minces et la différence de pression entre les deux fluides est relativement importante. Le module selon cet aspect de l'invention concilie les impératifs de faisabilité industrielle, de résistance mécanique et de performances hydrauliques et thermiques, donc de légèreté et compacité de l'échangeur de chaleur résultant.

Selon un autre aspect de l'invention, le procédé pour réunir deux tôles par un cordon de soudure au laser, en particulier pour fabriquer un module d'échange de chaleur pour un faisceau, est caractérisé en ce qu'on forme la soudure à travers une fenêtre d'un dispositif presseur qui presse les deux tôles en contact mutuel pendant la formation de la soudure.

Pour les cordons de soudure de grande longueur, une fois un cordon élémentaire terminé, on relâche la pression du dispositif presseur pour libérer les tôles et leur permettre de coulisser par rapport au dispositif presseur jusqu'à une position où l'emplacement d'un cordon élémentaire suivant est positionné dans la fenêtre. Pour réaliser plusieurs cordons longitudinaux parallèles, on emploie un presseur en forme de peigne comportant plusieurs fenêtres allongées parallèles, à travers lesquelles on forme un cordon élémentaire pour chaque cordon longitudinal, et ceci pour chaque position des tôles entre deux déplacements.

Le procédé pour fabriquer un module d'échange de chaleur dans lequel on réunit deux tôles par des cordons de soudure longitudinaux parallèles, et par un cordon de soudure de fermeture au moins partielle à chaque extrémité, puis on introduit entre les tôles un liquide sous pression pour écarter les tôles l'une de l'autre par hydroformage entre les cordons de soudure, est caractérisé en ce qu'on forme le cordon de soudure de fermeture à distance de l'extrémité des cordons de soudure longitudinaux de manière à faire apparaître un passage de transition entre l'extrémité du module et les conduits longitudinaux qui se forment entre les cordons de soudure longitudinaux. Le passage de transition constitue une zone dans laquelle la largeur du module varie entre une valeur relativement peu réduite par rapport à la largeur initiale des tôles à l'extrémité du module, et une valeur plus réduite dans la zone des conduits longitudinaux.

Pour réaliser le module, on peut ensuite couper l'ébauche à travers le passage de transition, par exemple par jet d'eau sous pression, pour conserver au moins un passage de transition dans le module terminé.

Selon un aspect important de l'invention, pendant l'hydroformage, on place les deux tôles entre des surfaces qui limitent l'expansion du module dans le sens de l'épaisseur, ces surfaces définissant pour le module une épaisseur moindre dans la zone de l'extrémité du module que dans une zone principale couvrant la majeure partie de la longueur du module. On ménage ainsi, entre les modules, au voisinage de l'extrémité de celui-ci, des espaces donnant accès aux seconds passages du faisceau, pour raccorder ceux-ci avec l'extérieur de l'échangeur.

Suivant un autre de ses aspects, l'invention concerne un échangeur de chaleur incorporant un faisceau selon le premier aspect, dans une gaine dont le volume interne communique avec les seconds passages. Il est préféré qu'en service le fluide baignant le volume intérieur de la gaine et les seconds passages soit celui des deux fluides qui est à la pression la plus basse. En effet, les modules obtenus par hydroformage ont une meilleure résistance à la pression interne qu'à la pression externe.

D'autres particularités et avantages de l'invention ressortiront encore de la description ci-après, relative à des exemples non-limitatifs.

Aux dessins annexés:
- la figure 1 est une vue en perspective partielle d'un module selon l'invention, en cours de fabrication;
- la figure 2 est une vue en plan du module, avec arrachement central;
- la figure 3 est une vue schématique en perspective d'une étape de soudage dans la fabrication d'un module;
- la figure 4 est une vue en prespective des presseurs utilisés pendant le soudage ;
- la figure 5 est une vue en plan de l'étape de soudage ;
- la figure 6 est une vue en coupe longitudinale illustrant l'étape d'hydroformage;
- la figure 7 est un détail de la partie gauche de la figure 6, à échelle agrandie ;
- la figure 8 est une vue partielle en perspective montrant l'étape d'hydroformage;
- la figure 9 est une vue partielle en perspective montrant l'assemblage des modules en un faisceau ;
- la figure 10 est une vue en plan d'une extrémité d'un mode de réalisation préféré d'un module utilisable dans le faisceau de la figure 9 ;
- la figure 11 est une vue en perspective d'une plaque d'extrémité du faisceau de la figure 9;
- la figure 12 est une vue en coupe longitudinale partielle d'un échangeur de chaleur selon l'invention ; et
- la figure 13 est une vue schématique en perspective montrant la suspension du faisceau sur des barrettes.

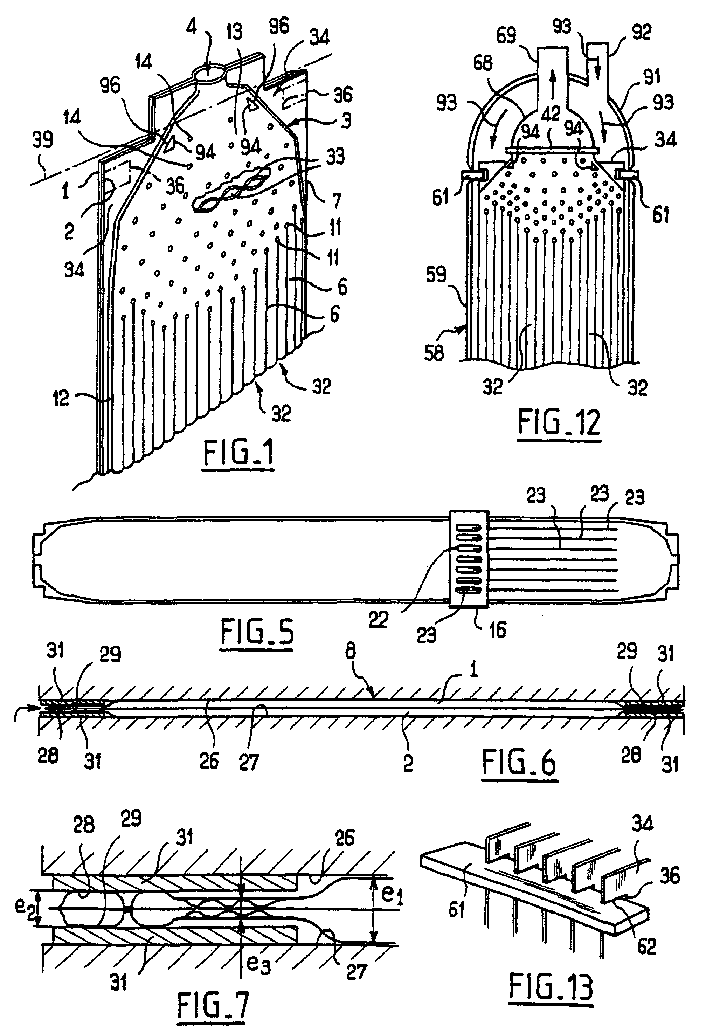

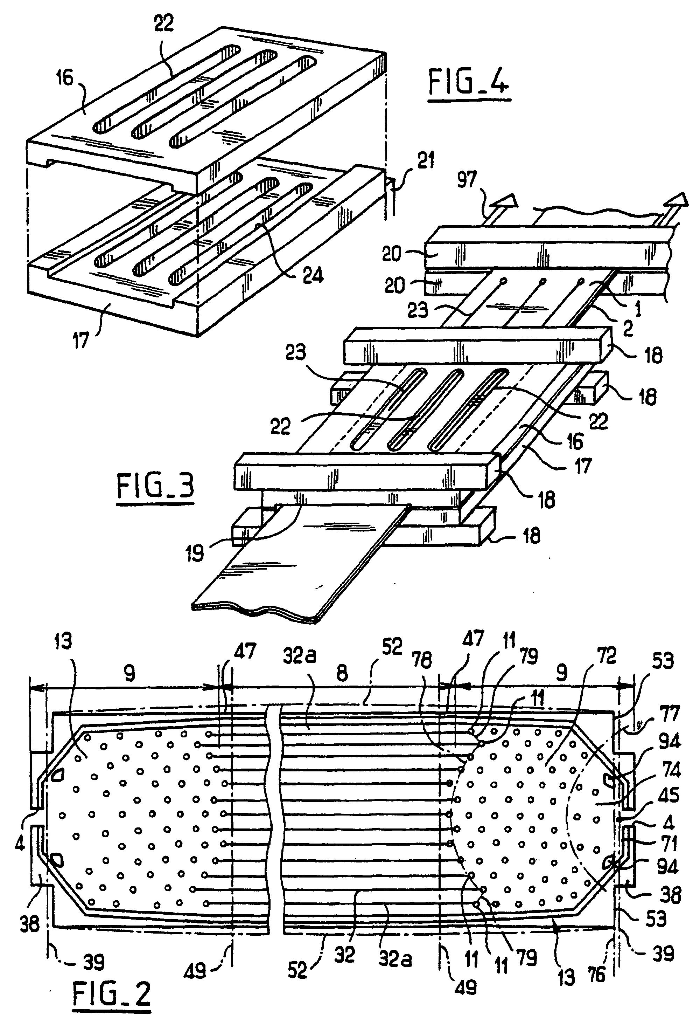

Dans l'exemple représenté aux figures 1 et 2, un module d'échange de chaleur est obtenu par soudage laser de deux tôles métalliques 1 et 2. Comme représenté par deux traits mixtes longitudinaux 52 à la figure 2, la forme initiale des tôles est rectangulaire dans une zone centrale 8, puis se rétrécit en trapèze dans chacune de deux zones d'extrémité 9, qui présentent des découpes latérales 53.

La largeur des tôles 1 et 2 peut aller par exemple de 50 à 800 mm. La longueur des tôles n'est limitée que par la dimension des moyens disponibles pour limiter l'expansion en épaisseur pendant l'hydroformage comme il sera dit plus loin. En pratique, des tôles de 10 m et plus sont possibles. L'épaisseur des tôles peut aller de 0,5 à 1 mm. Elle est donc très faible, pour des raisons d'ordre mécanique et économique ainsi que thermique.

Le soudage comporte au moins un cordon périphérique 3 présentant une interruption 4 formant orifice au milieu de l'une des extrémités longitudinales des tôles. Le soudage au laser est encore effectué selon des cordons longitudinaux 6 parallèles aux bords longitudinaux 7 des tôles 1 et 2 et qui s'étendent sur toute la zone centrale 8 des tôles, couvrant la majeure partie de la longueur des tôles à l'exception des deux zones d'extrémité 9, adjacentes chacune à l'une des extrémités longitudinales des tôles. Chaque extrémité des cordons de soudure 6 est renforcée par un point de soudage 11 constitué en pratique par un cordon circulaire ou ovoïde de faible diamètre. Dans la zone centrale, le cordon périphérique 3, présente des segments longitudinaux 12 parallèles et sensiblement de même longueur que les cordons longitudinaux 6. Dans chaque zone d'extrémité 9, le cordon périphérique 3 définit une zone de transition 13 dont la dimension mesurée parallèlement à la largeur des tôles 1 et 2 diminue progressivement depuis l'extrémité des cordons longitudinaux 6 jusqu'à l'interruption 4. La zone de transition 13 présente dans l'exemple représenté la forme de deux trapèzes successifs, l'un faiblement convergent adjacent aux cordons longitudinaux 6 et l'autre plus fortement convergent allant jusqu'à l'interruption 4. Dans la zone de transition 13, les deux tôles sont réunies l'une à l'autre par des points de soudure au laser 14 réalisés sous la forme de cordons circulaires ou ovoïdes.

Chaque zone de transition 13 se compose d'une région sans points de soudure 71, adjacente à l'interruption 4, d'une région à points de soudure rapprochés 72 adjacente aux extrémités 11 des cordons de soudure longitudinaux 6, et d'une région 74 située entre les deux précédentes relativement à la longueur .des tôles.

Dans la région à points rapprochés 72, les points obéissent à une disposition en quinconce à laquelle appartiennent également des points de soudure 11 formés aux extrémités des cordons longitudinaux 6. Chaque cordon 6 a donc une longueur différente de ses voisins.

Dans la région 74, les points de soudure sont également disposés en quinconce, mais avec plus d'espace ente eux. Les lignes en trait mixte 76, 77, 78, qui seront décrites en détail plus loin, visualisent respectivement la séparation entre les régions 71 et 74, la séparation entre les régions 74 et 72, et une ligne passant sensiblement par toutes les extrémités 11 des cordons 6.

Pour obtenir, lors de l'hydroformage qui va suivre, des conduits aussi proches que possible du profil tubulaire, entre les cordons de soudure longitudinaux 6, la distance entre deux cordons longitudinaux successifs 6 doit être réduite. Il importe également, pour obtenir une bonne compacité de l'échangeur, que le diamètre des quasi-tubes ainsi formés soit le plus faible possible, sans quoi l'intérêt économique disparait très rapidement. Une distance comprise entre 15 et 30mm entre les cordons de soudure longitudinaux 6 adjacents s'est avérée avantageuse, mais cette valeur n'est pas limitative.

On va maintenant décrire en référence aux figures 3 à 5 un procédé de soudage qui permet d'éviter le gauchissement des tôles sous l'effet de la contrainte thermique de soudage, de manière à éviter d'une part le décollement mutuel des tôles pendant le soudage et d'autre part l'obtention de modules présentant des défauts de planéité.

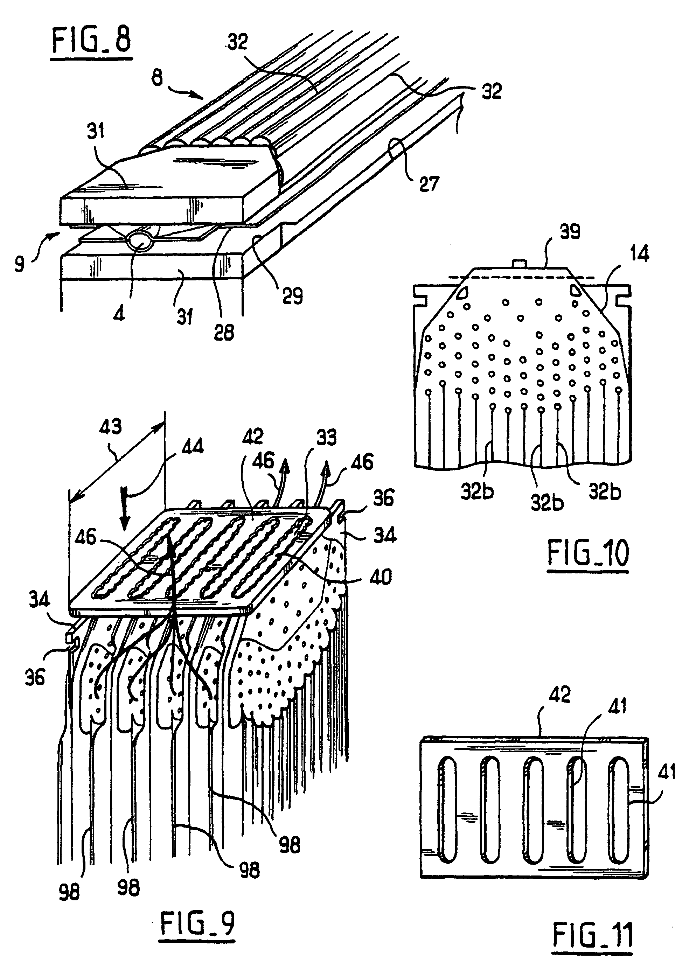

Pour réaliser les cordons de soudure longitudinaux 6, on utilise deux presseurs 16, 17 (figures 3 et 4) en forme de plaque, entre lesquels peuvent défiler les deux tôles 1 et 2 placées en superposition. Les presseurs 16 et 17 sont soumis à l'action sélective de traverses presseuses 18 elles-mêmes actionnées par une presse. Quand la presse est activée, les deux presseurs 16 et 17 compriment fortement les tôles 1 et 2 l'une contre l'autre en empêchant tout écartement mutuel entre elles. Quand les presseurs 16 et 17 sont relâchés, d'autres presseurs 20, situés à distance des presseurs 16, 17, se serrent sur les deux tôles 1 et 2 puis se déplacent selon la flèche 97 pour faire avancer les tôles 1 et 2 sur une distance prédéterminée entre les plaques 16 et 17. Puis les "autres" presseurs 20 se desserrent et reviennent dans la position représentée. Les deux plaques 16 et 17 définissent entre elles une fente 19 dont la largeur correspond sensiblement à celle des tôles 1 et 2. Lorsque les tôles 1 et 2 avancent entre les presseurs 16 et 17, ces derniers se positionnent automatiquement en direction latérale par rapport aux tôles 1 et 2. Les presseurs 16 et 17 sont par contre empêchés de suivre longitudinalement les tôles 1 et 2 grâce à une butée 21 (figure 4) solidaire du bâti de la machine à souder.

Les presseurs 16 et 17 ont la configuration d'un peigne, c'est-à-dire qu'ils présentent pour chaque cordon de soudure longitudinal 6 à réaliser, une fenêtre allongée 22 ou 24. Il y a donc une série de fenêtres supérieures 22 parallèles et une série de fenêtres inférieures 24 parallèles, correspondantes. A des fins de simplification, seules trois fenêtres 22 ont été représentées à la figure 3 et sept à la figure 5, mais ces fenêtres peuvent être plus nombreuses. Chaque fenêtre 22 ou 24 laisse apparaître la tôle 1 ou 2 correspondante dans la région où une partie d'un cordon de soudure respectif 6 est à réaliser.

Chaque fois que les tôles 1 et 2 s'arrêtent, un cordon élémentaire 23 est formé à travers chaque fenêtre supérieure 22, soit par une tête unique parcourant longitudinalement chaque fenêtre supérieure 22 l'une après l'autre, soit par une tête multiple capable de souder à travers plusieurs fenêtres 22 à la fois. Une fois les cordons élémentaires 23 réalisés à travers les fenêtres 22, les tôles 1 et 2 se déplacent d'une longueur correspondant à un cordon élémentaire 23. Les fenêtres inférieures 24 servent à éviter que la soudure laser réalise en même temps un soudage entre les tôles 1, 2 et le presseur inférieur 17.

De manière non représentée, le cordon périphérique 3 et les points de soudure 11, 14 peuvent être réalisés en suivant une procédure analogue, au moyen d'un presseur muni de fenêtre(s) formées et positionnées de manière appropriée. Par exemple, pour la zone de transition, les fenêtres peuvent consister en des orifices ayant la disposition relative correspondant à celle voulue pour un groupe de points de soudure.

On va maintenant décrire en référence aux figures 6 à 8 l'étape de l'hydroformage du module. Pour cela, on place l'ébauche constituée par les deux plaques soudées, entre deux surfaces 26 et 27 présentant entre elles un écartement bien déterminé qui correspond à l'épaisseur voulue pour le module dans la zone centrale 8. Les surfaces 26 et 27 ont une dimension suffisante pour couvrir complètement la zone centrale 8 de l'ébauche. Des surfaces 28 et 29 plus rapprochées l'une de l'autre définissent entre elles l'épaisseur plus réduite voulue pour les zones d'extrémité 9 de l'ébauche. Dans l'exemple représenté, les surfaces 28 et 29 sont définies par des cales 31 placées contre les surfaces 26 et 27, lesquelles s'étendent également sur les zones d'extrémité 9. A la figure 8, la surface supérieure 26 a été omise dans un but de clarté. On injecte ensuite un liquide sous pression, par exemple de l'eau, sous une pression de par exemple 4 à 17 MPa, par l'une au moins des interruptions 4 du cordon de soudure 3, l'autre extrémité pouvant être obturée ou servir d'autre point d'injection du liquide. Le liquide provoque le gonflement de l'ébauche par écartement des deux tôles l'une par rapport à l'autre entre les cordons de soudure et entre les points de soudure. L'ébauche prend alors une première épaisseur e1 relativement grande dans la zone centrale 8, une deuxième épaisseur e2 plus faible dans les régions 71 et 74 des zones d'extrémité 9, et une troisième épaisseur e3 encore plus faible dans la région 72. L'épaisseur e1 correspond sensiblement à l'écartement entre les faces 26 et 27. L'épaisseur e2 correspond sensiblement à l'écartement entre les faces 28 et 29 des cales 31. L'épaisseur e3 résulte du grand nombre de points de soudure dans la région 72, ou au besoin d'une surépaisseur prévue sur une partie des cales 31.

Comme l'illustre la figure 1, l'hydroformage fait apparaître des conduits longitudinaux 32 entre les cordons de soudure longitudinaux 6 et, comme cela est illustré par un arrachement, un passage de transition 33 dans la zone de transition 13. Le passage 33 fait communiquer les conduits longitudinaux 32 avec l'ouverture 4. Les deux tôles forment de part et d'autre de la zone de transition 13 des oreilles 34 dans lesquelles on forme par découpage des encoches ou échancrures 36 représentées en pointillés à la figure 1. A la figure 9, certaines des oreilles 34 ont été omises pour simplifier le dessin. Les échancrures des oreilles qui se trouvent en position supérieure doivent servir à la suspension des modules dans l'échangeur comme il sera dit plus loin.

On va maintenant décrire en référence aux figures 9 à 11 l'assemblage des modules pour former un faisceau. On commence par couper et éliminer une bande d'extrémité 38 à chaque extrémité de l'ébauche, selon une ligne de coupe 39 (figures 1 et 2) traversant la région 71 de la zone de transition 13 non loin de l'interruption 4. On forme ainsi, à la place de l'interruption 4, un orifice terminal 40 du module, qui communique avec les conduits longitudinaux 32 par l'intermédiaire du passage de transition 33.

La figure 2 fait ressortir que chaque région à points rapprochés 72 a une forme d'arc de cercle autour du centre 45 de l'orifice terminal 40 (la référence 40 n'est pas portée à la figure 2), et s'étend jusqu'à chaque bord latéral de la zone de transition 13. La ligne 78 passant par les extrémités 11 des cordons de soudure longitudinaux 6 a également la forme d'un arc de cercle autour du centre 45. Toutefois, cet arc de cercle présente des extrémités 79 recourbées en direction opposée à l'orifice terminal 40. Ceci s'est avéré favorable pour éviter une difficulté d'alimentation des conduits longitudinaux 32a adjacents aux deux bords longitudinaux du module. Grâce aux dispositions en arc de cercle de la région 72 et de la ligne 78, le premier fluide rencontre, en service, à peu près la même résistance à l'écoulement ou perte de charge dans son trajet entre l'orifice terminal et chaque conduit longitudinal 32, car la distance est la même ainsi que le nombre de points de soudure rencontrés. La vitesse d'écoulement est à peu près la même tout le long de ce trajet car la section transversale de la région 74 est à peu près la même que la section transversale de la région 72, moins épaisse mais plus large.

Une fois éliminées les bandes 38 par coupe en 39, effectuée de préférence au jet hydraulique sous pression, on emboîte les orifices terminaux 40 dans des ouvertures de forme correspondante 41 d'une plaque d'extrémité 42 (figures 9 et 11) qui est commune à tous les modules du faisceau à réaliser et qui présente, parallèlement à la largeur des modules, une dimension 43 inférieure à la largeur des modules. Les orifices terminaux 40 sont soudés, comme illustré à la figure 9, dans les ouvertures 41, de manière à fixer les modules dans une position où ils sont en contact ou quasi-contact les uns avec les autres par les crêtes extérieures des ondulations de la zone centrale 8, maintenant ondulée par la formation des canaux 32. Ainsi, un premier fluide d'échange, symbolisé par la flèche 44 à la figure 9 peut pénétrer dans les passages intérieurs de chaque module par les extrémités ouvertes 40 des modules, à travers les ouvertures 41 de la plaque 42. Un second fluide d'échange peut pénétrer dans les seconds canaux également de forme générale tubulaire sensiblement axiale, qui sont formés entre les creux d'ondulation des modules adjacents et entre les lignes de contact ou quasi-contact 98 (figure 9). Pour cela le second fluide passe de chaque côté de la plaque 42, grâce à la dimension 43 réduite de celle-ci, et entre les régions à points rapprochés 72 des zones de transition 13 des modules adjacents, grâce à leur épaisseur réduite, comme cela est symbolisé dans le sens sortant par les flèches 46. On voit que les flèches 46 sont sensiblement axiales. Les régions 72 forment donc entre elles des seconds passages de transition qui débouchent latéralement de chaque côté du faisceau et communiquent avec les seconds canaux.

Les figures 12 et 13 illustrent un échangeur selon l'invention comprenant une gaine 59 dont le profil rectangulaire correspond à celui du faisceau et qui ceinture étroitement le faisceau sur toute sa longueur. Le faisceau est suspendu avec les canaux 32 orientés verticalement. Au sommet de la gaine 59 sont fixées par soudage deux barrettes opposées 61 (voir aussi figure 13) qui font saillie vers l'intérieur de la gaine et sont engagées dans les échancrures 36 des oreilles 34 des modules pour supporter les modules, et par conséquent le faisceau, par suspension résultant de l'appui des épaulements 62 formant l'extrémité supérieure des échancrures 36 contre la face supérieure des barrettes 61. Une boîte de raccordement 68 raccordée à un conduit de raccordement 69 pour le premier fluide, est soudée de manière étanche, par son pourtour ouvert, avec le pourtour de la plaque 42 pour faire communiquer les orifices terminaux des modules avec le conduit de raccordement 69.

La boite de raccordement 68 a une forme générale semi-cylindrique par rapport à laquelle la plaque 42 s'étend sensiblement selon un plan axial. Une seconde boite de raccordement 91 de forme semi-cylindrique sensiblement coaxiale à la boîte 68 mais avec un plus grand diamètre est fixée au bord supérieur de la gaine 59 et à la face supérieure des barrettes 61 pour fermer l'extrémité de la gaine 59. Toutefois, un conduit de raccordement 92 fait communiquer la boîte de raccordement 91 avec l'extérieur de l'échangeur pour la circulation du second fluide selon les flèches 93.

Le conduit de raccordement 69 traverse de manière étanche la paroi de la boite de raccordement 91.

L'extrémité inférieure de l'échangeur peut avoir une structure semblable à celle qui vient d'être décrite excepté qu'il n'y a pas nécessairement de barrettes 61.

L'ensemble représenté à la figure 14 peut constituer un échangeur, ou être logé dans une enceinte résistant à la pression. L'enceinte comprend des tubulures de circulation des fluides, qui sont raccordées aux conduits de raccordement 69, 92 par exemple par des soufflets de dilatation. Il est alors préféré selon l'invention que l'intérieur de l'enceinte communique avec le trajet de celui des deux fluides qui est à la plus basse pression et que ce fluide soit celui passant entre les modules. Dans ce cas, la boite de raccordement extérieure du bas peut être supprimée pour établir la communication entre le circuit basse pression aval et l'intérieur de l'enceinte.

On remarque dans la région 74 (figure 2) de la zone de transition une soudure de renfort annulaire 94 alignée avec chaque extrémité du futur orifice terminal 40 du module. Les soudures 94 renforcent chaque module à l'égard de la concentration de contrainte en traction à laquelle on peut s'attendre dans cette zone en raison de la surpression qui tend à arracher les modules relativement à la plaque d'extrémité 42. La figure 1 montre qu'on a réservé entre chaque soudure de renfort 94 et le bord de la zone de transition un conduit de vidange 96 pour éviter toute rétention de liquide dans cette zone si l'échangeur doit être vidé pour une opération de nettoyage, d'entretien etc.

## Revendications

1. Faisceau d'échange de chaleur comprenant des modules comprenant chacun deux tôles (1,2) soudées selon des lignes longitudinales (6) définissant entre elles des premiers passages (32), de forme sensiblement tubulaire, pour un premier fluide d'échange, ces modules étant positionnés les uns par rapport aux autres de façon à définir entre les modules des seconds passages pour un second fluide d'échange, le faisceau comprenant des moyens répartiteurs (42, 72) pour répartir le premier fluide dans les premiers passages (32) et le second fluide dans les seconds passages, **caractérisé en ce que** les modules sont positionnés de façon que les crêtes externes des ondulations des modules voisins soient sensiblement en contact mutuel, **en ce que** les modules comprennent à l'une au moins des extrémités du faisceau une zone de transition (13) définissant des premiers passages de transition (33) par lesquels les premiers passages sensiblement tubulaires (32) communiquent avec un orifice terminal (40) du module, et **en ce que** les zones de transition (13) des modules voisins forment entre elles, en tant que moyens répartiteurs pour le second fluide, des seconds passages de transition (46) par lesquels des seconds passages sensiblement tubulaires, formés pour le second fluide entre les lignes de contact ou quasi-contact (98) des crêtes extérieures des ondulations des modules adjacents, communiquent entre eux et avec l'extérieur du faisceau.

2. Faisceau d'échange selon la revendication 1, **caractérisé en ce que** les premiers passages de transition (33) sont agencés pour que la perte de charge soit sensiblement la même entre un orifice terminal (40) de chaque module et chaque premier passage sensiblement tubulaire (32) de ce module.

3. Faisceau d'échange selon la revendication 1 ou 2, **caractérisé en ce que** les modules sont moins épais dans une partie au moins (72) de la zone de transition (13) que dans la zone ondulée définissant les premiers passages tubulaires, de façon à définir pour le second fluide, entre les zones de transition (13) des modules adjacents, lesdits seconds passages de transition, débouchant de chaque côté du faisceau.

4. Faisceau d'échange de chaleur selon la revendication 1 ou 2, **caractérisé en ce que** la zone de transition (13) de chaque module comprend une région terminale (74) adjacente à l'orifice terminal (40) et une région intermédiaire (72) disposée entre la région terminale (74) et la zone ondulée, et **en ce que** cette région intermédiaire (72) est moins épaisse que d'une part ladite région terminale (74) et d'autre part la zone ondulée, de façon à définir entre les régions intermédiaires (72) des modules adjacent lesdits seconds passages de transition pour le second fluide.

5. Faisceau d'échange de chaleur selon l'une des revendications 1 à 4, **caractérisé en ce que** la zone de transition (13) de chaque module est définie par une poche entre les deux tôles du module, et **en ce que** la poche communique avec les premiers passages sensiblement tubulaires.

6. Faisceau d'échange selon l'une des revendications 1 à 5, **caractérisé en ce que** le premier passage de transition (33) a selon la largeur du module une dimension progressivement rétrécie depuis la zone ondulée où se trouvent les lignes longitudinales de soudure au laser (6) jusqu'à l'orifice terminal (40) du module.

7. Faisceau d'échange selon la revendication 5 ou 6, **caractérisé par** des points de soudure (14) entre les deux tôles (1, 2) dans la zone de transition (33).

8. Faisceau d'échange selon la revendication 7, **caractérisé en ce que** les points de soudure (14) sont répartis en une région à points de soudure espacés (74) au voisinage de l'orifice terminal (40) et une région à points de soudure rapprochés (72) entre la région à points de soudure espacés (74) et les premiers passages (32).

9. Faisceau d'échange selon la revendication 8, **caractérisé en ce que** la région à points de soudure rapprochés (72) a une forme générale arquée autour du centre (45) de l'orifice terminal (40), et les extrémités (73) des cordons de soudure définissant les passages sensiblement tubulaires sont répartis selon une ligne (78) arquée autour du centre (45) de l'orifice terminal (40).

10. Faisceau d'échange de chaleur selon la revendication 8 ou 9, **caractérisé en ce que** l'épaisseur (e3) du module est moindre dans la région à points de soudure rapprochés (72) que dans la zone des passages sensiblement tubulaires, de façon à définir pour le second fluide des seconds passages de transition entre les régions à points de soudure rapprochés (72) des modules adjacents.

11. Faisceau d'échange de chaleur selon l'une des revendications 7 à 10, **caractérisé en ce que** les points de soudure sont répartis selon une disposition en quinconce à laquelle appartiennent les extrémités (73) des lignes de soudure longitudinales.

12. Faisceau d'échange de chaleur selon l'une des revendications 1 à 10, **caractérisé en ce que** les extrémités (73) des lignes de soudure longitudinales appartiennent à une disposition en quinconce.

13. Faisceau d'échange de chaleur selon l'une des revendications 1 à 12, **caractérisé en ce que** la zone de transition est délimitée du côté opposé à l'orifice terminal (40), par les extrémités (73) des lignes de soudure longitudinales disposées selon une ligne (78) arquée autour du centre (45) de l'orifice terminal.

14. Faisceau d'échange de chaleur selon la revendication 13, **caractérisé en ce que** la ligne arquée (78) présente des extrémités (79) coudées en direction opposée à l'orifice terminal (40).

15. Faisceau d'échange de chaleur selon l'une des revendications 1 à 14, **caractérisé en ce que** les moyens répartiteurs comprennent, à l'une au moins des extrémités des modules:
- une plaque d'extrémité (42), appartenant également aux moyens de positionnement, traversée par des ouvertures (41) dans chacune desquelles est fixée de manière étanche un orifice terminal (40) de l'un respectif des modules;
- une boîte de raccordement (68), fixée à la plaque de façon que l'intérieur de la boîte communique avec les premiers passages à travers les ouvertures de la plaque.

16. Faisceau selon la revendication 15, **caractérisé en ce que** les deux tôles de chaque module sont réunies par des soudures de renforcement (94) sensiblement alignées avec les extrémités longitudinales de l'orifice terminal (40) du module.

17. Faisceau d'échange de chaleur selon la revendication 16, **caractérisé en ce qu'**un canal de vidange (96) est formé entre chaque soudure de renforcement (94) et un bord de l'espace intérieur du module.

18. Faisceau d'échange selon l'une des revendications 15 à 17, **caractérisé en ce que** la plaque d'extrémité (42) a parallèlement à la largeur des modules une dimension (43) plus faible que la largeur des modules, pour laisser libre de chaque côté de la plaque un trajet d'accès du second fluide aux seconds passages.

19. Faisceau d'échange selon l'une des revendications 1 à 18, **caractérisé en ce qu'**à l'une au moins des extrémités de chaque module les tôles (1, 2) forment des oreilles (34) de suspension des modules de chaque côté du passage de transition (33).

20. Faisceau d'échange selon la revendication 19, **caractérisé en ce que** les oreilles forment un épaulement (62) destiné à reposer sur une barrette support (61) pour la suspension du module avec les premiers passages sensiblement tubulaires (32) orientés verticalement.

21. Faisceau d'échange selon l'une des revendications 1 à 20, **caractérisé en ce que** la distance entre les lignes longitudinales (6) voisines est inférieure ou sensiblement égale à 30mm.

22. Procédé pour réunir deux tôles par un cordon de soudure au laser, pour fabriquer un module d'échange de chaleur pour un faisceau selon l'une des revendications 1 à 21, **caractérisé en ce qu'**on forme la soudure à travers une fenêtre (22) d'un dispositif presseur qui presse les deux tôles (1, 2) en contact mutuel pendant la formation de la soudure.

23. Procédé selon la revendication 22, **caractérisé en ce qu'**on forme de façon quasi-simultanée plusieurs cordons de soudure élémentaires parallèles, destinés à faire partie de plusieurs lignes de soudure parallèles.

24. Procédé selon la revendication 23, **caractérisé en ce que** la distance entre les cordons de soudure est inférieure ou sensiblement égale à 30mm.

25. Procédé selon la revendication 23 ou 24, **caractérisé en ce que** la fenêtre (22) appartient à un presseur mobile (16) qui se positionne relativement au bord des tôles (1, 2), et **en ce que** le dispositif presseur comprend en outre des moyens d'application d'effort (18) qui appliquent un effort de pressage sur le presseur (16) pendant la formation des cordons élémentaires (23, 24) et relâchent l'effort de pressage pendant que les tôles (1, 2) défilent par rapport au presseur (16) pour placer face à la fenêtre (22) l'emplacement d'un autre cordon élémentaire (23) à réaliser.

26. Procédé selon l'une des revendications 23 à 25, **caractérisé en ce que** le presseur (16) est un peigne définissant plusieurs fenêtres allongées parallèles (22) pour réaliser dans chaque position des tôles (1, 2) par rapport au presseur (16) plusieurs cordons élémentaires (23) parallèles destinés à faire partie de plusieurs lignes longitudinales de soudure parallèles (6) reliant les deux tôles (1, 2).

27. Procédé pour fabriquer un module d'échange de chaleur, pour un faisceau d'échange de chaleur selon l'une des revendications 1 à 21, dans lequel on réunit deux tôles (1, 2) par des cordons de soudure longitudinaux parallèles (6), et par un cordon de soudure (3) de fermeture au moins partielle à chaque extrémité, puis on introduit entre les tôles (1, 2) un liquide sous pression pour écarter les tôles l'une de l'autre, par hydroformage, entre les cordons de soudure, **caractérisé en ce qu'**on forme le cordon de soudure de fermeture à distance de l'extrémité des cordons de soudure longitudinaux de manière à faire apparaître un passage de transition (33) entre l'extrémité du module et les conduits longitudinaux (32) qui se forment entre les cordons de soudures longitudinaux (6).

28. Procédé selon la revendication 27, **caractérisé en ce qu'**on donne au passage de transition (33) une forme qui se rétrécit, dans le sens de la largeur des tôles, depuis les cordons de soudure longitudinaux (6) vers l'extrémité du module.

29. Procédé selon la revendication 27 ou 28, **caractérisé en ce qu'**on soude les deux tôles (1, 2) l'une avec l'autre par points (14) dans le passage de transition (33).

30. Procédé selon la revendication 29, **caractérisé en ce qu'**après l'hydroformage on coupe l'extrémité du faisceau selon une ligne (39) écartée des points de soudure (14) de façon à définir un orifice terminal (40) du module.

31. Procédé selon l'une des revendications 27 à 29, **caractérisé en ce qu'**après l'hydroformage on coupe l'extrémité du faisceau de façon à définir un orifice terminal (40) du module à distance de l'extrémité des cordons de soudure longitudinaux (6).

32. Procédé selon l'une des revendications 27 à 31, **caractérisé en ce que** pendant l'hydroformage, on place les deux tôles (1, 2) entre des surfaces (26, 27, 28, 29) qui limitent l'expansion du module dans le sens de l'épaisseur, ces surfaces définissant pour le module une épaisseur moindre dans une zone (9) de l'extrémité du module que dans une zone centrale (8) couvrant la majeure partie de la longueur du module.

33. Procédé selon la revendication 32, **caractérisé en ce que** pour définir ladite épaisseur moindre, on place une cale (31) contre l'une au moins des surfaces (26, 27) définissant entre elles l'épaisseur maximale permise à la zone centrale (8).

34. Echangeur de chaleur comprenant un faisceau selon l'une des revendications 1 à 21 dans une gaine (59) dont le volume intérieur communique avec les seconds passages.

35. Echangeur selon la revendication 34, **caractérisé en ce que** le fluide baignant le volume intérieur et les seconds passages est celui des deux fluides qui est à la pression la plus basse.

36. Echangeur selon la revendication 34 ou 35, **caractérisé en ce que** les premiers passages sensiblement tubulaires (32) sont orientés verticalement et la gaine est solidaire de supports (61) faisant saillie vers l'intérieur pour s'engager sous des épaulements (62) définis sur des oreilles latérales (34) des modules du faisceau.

## Patentansprüche

1. Wärmetauscher-Bündel, das Module umfaßt, die jeweils zwei Bleche (1, 2) aufweisen, die längs Längslinien (6) verschweißt sind, die miteinander erste im wesentlichen rohrförmige Durchgänge (32) für ein erstes Wärmetauschfluid abgrenzen, wobei diese Module zueinander so positioniert sind, daß zwischen den Modulen zweite Durchgänge für ein zweites Wärmetauschfluid abgegrenzt werden, wobei das Bündel Verteilungsmittel (42, 72) aufweist, um das erste Fluid auf die ersten Durchgänge (32) und das zweite Fluid auf die zweiten Durchgänge zu verteilen, **dadurch gekennzeichnet, daß** die Module so positioniert sind, daß die Außenscheitel der Wellungen der benachbarten Module im wesentlichen in gegenseitigem Kontakt sind, daß die Module mindestens an einem der Enden des Bündels eine Übergangszone (13) aufweisen, die erste Übergangsdurchgänge (33) bildet, über die die ersten im wesentlichen rohrförmigen Durchgänge (32) mit einer Endöffnung (40) des Moduls in Verbindung sind, und daß die Übergangszonen (13) der benachbarten Module miteinander als Verteilungsmittel für das zweite Fluid zweite Übergangsdurchgänge (46) bilden, über die zweite im wesentlichen rohrförmige Durchgänge, die für das zweite Fluid zwischen den Kontaktlinien oder Quasi-Kontaktlinien (98) der Außenscheitel der Welluhgen der benachbarten Module gebildet sind, miteinander und mit dem Äußeren des Bündels in Verbindung sind.

2. Wärmetauscher-Bündel nach Anspruch 1, **dadurch gekennzeichnet, daß** die ersten Übergangsdurchgänge (33) so ausgebildet sind, daß der Lastverlust zwischen einer Endöffnung (40) jedes Moduls und jedem ersten im wesentlichen rohrförmigen Durchgang (32) dieses Moduls im wesentlichen der gleiche ist.

3. Wärmetauscher-Bündel nach Anspruch 1 oder 2, **dadurch gekennzeichnet, daß** die Module in mindestens einem Teil (72) der Übergangszone (13) weniger dick als in der die ersten rohrförmigen Durchgänge abgrenzenden gewellten Zone ist, so daß für das zweite Fluid zwischen den Übergangszonen (13) der benachbarten Module die zweiten Übergangsdurchgänge abgegrenzt werden, die auf jeder Seite des Bündels ausmünden.

4. Wärmetauscher-Bündel nach Anspruch 1 oder 2, **dadurch gekennzeichnet, daß** die Übergangszone (13) jedes Moduls einen Endbereich (74), der der Endöffnung (40) benachbart ist, und einen Zwischenbereich (72) aufweist, der zwischen dem Endbereich (74) und der gewellten Zone angeordnet ist, und daß dieser Zwischenbereich (72) weniger dick als einerseits der Endbereich (74) und andererseits die gewellte Zone ist, so daß zwischen den Zwischenbereichen (72) der benachbarten Module die zweiten Übergangsdurchgänge für das zweite Fluid abgegrenzt werden.

5. Wärmetauscher-Bündel nach einem der Ansprüche 1 bis 4, **dadurch gekennzeichnet, daß** die Übergangszone (13) jedes Moduls durch eine Tasche zwischen den beiden Blechen des Moduls abgegrenzt ist, und daß die Tasche mit den ersten im wesentlichen rohrförmigen Durchgängen in Verbindung ist.

6. Wärmetauscher-Bündel nach einem der Ansprüche 1 bis 5, **dadurch gekennzeichnet, daß** der erste Übergangsdurchgang (33) in der Breite des Moduls eine Abmessung besitzt, die von der gewellten Zone an, in der sich die Laserschweißungs-Längslinien (6) befinden, bis zu der Endöffnung (40) des Moduls allmählich reduziert wird.

7. Wärmetauscher-Bündel nach Anspruch 5 oder 6, **gekennzeichnet durch** Schweißpunkte (14) zwischen den beiden Blechen (1, 2) in der Übergangszone (33).

8. Wärmetauscher-Bündel nach Anspruch 7, **dadurch gekennzeichnet, daß** die Schweißpunkte (14) auf einen Bereich mit voneinander entfernten Schweißpunkten (74) in Nähe der Endöffnung (40) und einen Bereich mit angenäherten Schweißpunkten (72) zwischen dem Bereich mit voneinander entfernten Schweißpunkten (74) und den ersten Durchgängen (32) verteilt sind.

9. Wärmetauscher-Bündel nach Anspruch 8, **dadurch gekennzeichnet, daß** der Bereich mit angenäherten Schweißpunkten (72) eine allgemeine um den Mittelpunkt (45) der Endöffnung (40) herum gebogene Form hat und die Enden (73) der die im wesentlichen rohrförmigen Durchgänge abgrenzenden Schweißraupen auf einer Linie (78) verteilt sind, die um den Mittelpunkt (45) der Endöffnung (40) herum gebogen ist.

10. Wärmetauscher-Bündel nach Anspruch 8 oder 9, **dadurch gekennzeichnet, daß** die Dicke (e3) des Moduls in dem Bereich(72) mit angenäherten Schweißpunkten kleiner als in der Zone der im wesentlichen rohrförmigen Durchgänge ist, so daß für das zweite Fluid zweite Übergangsdurchgänge zwischen den Bereichen (72) mit angenäherten Schweißpunkten der benachbarten Module abgegrenzt werden.

11. Wärmetauscher-Bündel nach einem der Ansprüche 7 bis 10, **dadurch gekennzeichnet, daß** die Schweißpunkte gemäß einer versetzten Anordnung verteilt sind, zu der die Enden (73) der Längsschweißlinien gehören.

12. Wärmetauscher-Bündel nach einem der Ansprüche 1 bis 10, **dadurch gekennzeichnet, daß** die Enden (73) der Längsschweißlinien zu einer versetzten Anordnung gehören.

13. Wärmetauscher-Bündel nach einem der Ansprüche 1 bis 12, **dadurch gekennzeichnet, daß** die Übergangszone auf der der Endöffnung (40) entgegengesetzten Seite durch die Enden (73) der Längsschweißlinien begrenzt ist, die längs einer um den Mittelpunkt (45) der Endöffnung herum gebogenen Linie (78) angeordnet sind.

14. Wärmetauscher-Bündel nach Anspruch 13, **dadurch gekennzeichnet, daß** die gebogene Linie (78) Enden (79) aufweist, die in der der Endöffnung (40) entgegengesetzten Richtung umgebogen ist.

15. Wärmetauscher-Bündel nach einem der Ansprüche 1 bis 14, **dadurch gekennzeichnet, daß** die Verteilungsmittel an mindestens einem der Enden der Module umfassen:
- eine Endplatte (42), die auch zu den Positionierungsmitteln gehört und die von Öffnungen (41) durchsetzt ist, in deren jeder eine Endöffnung (40) des jeweiligen Moduls dicht befestigt ist;
- einen Anschlußkasten (68), der an der Platte so befestigt ist, daß das Innere des Kastens mit den ersten Durchgängen über die Öffnungen der Platte in Verbindung ist.

16. Bündel nach Anspruch 15, **dadurch gekennzeichnet, daß** die beiden Bleche jedes Moduls durch Verstärkungsschweißungen (94) verbunden sind, die mit den Längsenden der Endöffnung (40) des Moduls im wesentlichen in einer Linie liegen.

17. Wärmetauscher-Bündel nach Anspruch 16, **dadurch gekennzeichnet, daß** eine Entleerungskanal (96) zwischen jeder Verstärkungsschweißung (94) und einem Rand des Innenraums des Moduls gebildet ist.

18. Wärmetauscher-Bündel nach einem der Ansprüche 15 bis 17, **dadurch gekennzeichnet, daß** die Endeplatte (42) parallel zur Breite der Module eine Abmessung (43) besitzt, die kleiner als die Breite der Module ist, um auf jeder Seite der Platte einen Zugangsweg des zweiten Fluids zu den zweiten Durchgängen frei zu lassen.

19. Wärmetauscher-Bündel nach einem der Ansprüche 1 bis 18, **dadurch gekennzeichnet, daß** die Bleche (1, 2) an mindestens einem der Enden jedes Moduls Laschen (34) zur Aufhängung der Module auf jeder Seite des Übergangsdurchgangs (33) bilden.

20. Wärmetauscher-Bündel nach Anspruch 19, **dadurch gekennzeichnet, daß** die Laschen eine Schulter (62) bilden, die dazu bestimmt ist, auf einer Tragschiene (61) zur Aufhängung des Moduls aufzuliegen, indem die ersten im wesentlichen rohrförmigen Durchgänge (32) vertikal gerichtet sind.

21. Wärmetauscher-Bündel nach einem der Ansprüche 1 bis 20, **dadurch gekennzeichnet, daß** der Abstand zwischen den benachbarten Längslinien (6) kleiner als oder im wesentlich gleich 30 mm ist.

22. Verfahren zur Verbindung von zwei Blechen durch eine Laserschweißraupe zur Herstellung eines Wärmetauscher-Moduls für ein Bündel nach einem der Ansprüche 1 bis 21, **dadurch gekennzeichnet, daß** man die Schweißung durch ein Fenster (22) einer Preßvorrichtung hindurch bildet, die die beiden Bleche (1, 2) während der Bildung der Schweißung in gegenseitigen Kontakt preßt.

23. Verfahren nach Anspruch 22, **dadurch gekennzeichnet, daß** man quasi gleichzeitig mehrere parallele Einzelschweißraupen bildet, die dazu bestimmt sind, Teil von mehreren parallelen Schweißlinien zu bilden.

24. Verfahren nach Anspruch 23, **dadurch gekennzeichnet, daß** der Abstand zwischen den Schweißraupen kleiner als oder im wesentlichen gleich 30 mm ist.

25. Verfahren nach Anspruch 23 oder 24, **dadurch gekennzeichnet, daß** das Fenster (22) zu einem beweglichen Presser (16) gehört, der sich bezüglich des Rands der Bleche (1, 2) positioniert, und daß die Preßvorrichtung außerdem Kraftausübungsmittel (18) aufweist, die während der Bildung der Einzelraupen (23, 24) auf den Presser (16) eine Preßkraft ausüben und die Preßkraft nachlassen, während die Bleche (1, 2) bezüglich des Pressers (16) sich vorbewegen, um vor das Fenster (22) die Stelle einer anderen herzustellenden Einzelraupe (23) zu bringen.

26. Verfahren nach einem der Ansprüche 23 bis 25, **dadurch gekennzeichnet, daß** der Presser (16) ein Kamm ist, der mehrere parallele langgestreckte Fenster (22) bildet, um in jeder Stellung der Bleche (1, 2) bezüglich des Pressers (16) mehrere parallele Einzelraupen (23) herzustellen, die dazu bestimmt sind, Teil von mehreren parallelen Längsschweißlinien (6), die die beiden Bleche (1, 2) verbinden, zu bilden.

27. Verfahren zur Herstellung eines Wärmetauscher-Moduls für ein Wärmetauscher-Bündel nach einem der Ansprüche 1 bis 21, bei dem man zwei Bleche (1, 2) durch parallele Längsschweißraupen (6) und durch eine Schweißraupe (3) zum mindestens partiellen Verschluß an jedem Ende verbindet und dann zwischen die Bleche (1, 2) eine unter Druck stehende Flüssigkeit einführt, um die Bleche durch Hydroformen zwischen den Schweißraupen voneinander zu entfernen, **dadurch gekennzeichnet, daß** man die Verschlußschweißraupe in einem Abstand von dem Ende der Längsschweißraupen bildet, so daß ein Übergangsdurchgang (33) zwischen dem Ende des Moduls und den Längskanälen (32) erscheint, die sich zwischen den Längsschweißraupen (6) bilden.

28. Verfahren nach Anspruch 27, **dadurch gekennzeichnet, daß** man dem Übergangsdurchgang (33) eine Form verleiht, die sich in der Richtung der Breite der Bleche von den Längsschweißraupen (6) an auf das Ende des Moduls zu verjüngt.

29. Verfahren nach Anspruch 27 oder 28, **dadurch gekennzeichnet, daß** man die beiden Bleche (1, 2) in dem Übergangsdurchgang (33) miteinander durch Punkte (14) verschweißt.

30. Verfahren nach Anspruch 29, **dadurch gekennzeichnet, daß** man nach dem Hydroformen das Ende des Bündels längs einer von den Schweißpunkten (14) entfernten Linie (39) abschneidet, so daß eine Endöffnung (40) des Moduls gebildet wird.

31. Verfahren nach einem der Ansprüche 27 bis 29, **dadurch gekennzeichnet, daß** man nach dem Hydroformen das Ende des Bündels abschneidet, so daß eine Endöffnung (40) des Moduls in einem Abstand von dem Ende der Längsschweißraupen (6) gebildet wird.

32. Verfahren nach einem der Ansprüche 27 bis 31, **dadurch gekennzeichnet, daß** man während des Hydroformens die beiden Bleche (1, 2) zwischen Flächen (26, 27, 28, 29) anordnet, die die Ausdehnung des Moduls in der Richtung der Dicke begrenzen, wobei diese Flächen für das Modul in einer Zone (9) des Endes des Moduls eine geringere Dicke als in einer zentralen Zone (8), die den größten Teil der Länge des Moduls bedeckt, festlegen.

33. Verfahren nach Anspruch 32, **dadurch gekennzeichnet, daß** man zur Festlegung dieser geringeren Dicke an mindestens eine der Flächen (26, 27), die miteinander die für die zentrale Zone (8) zugelassene Höchstdicke festlegen, eine Einlage (31) anlegt.

34. Wärmetauscher, umfassend ein Bündel nach einem der Ansprüche 1 bis 21 in einer Hülle (59), deren Innenvolumen mit den zweiten Durchgängen in Verbindung ist.

35. Wärmetauscher nach Anspruch 34, **dadurch gekennzeichnet, daß** das das Innenvolumen und die zweiten Durchgänge bespülende Fluid dasjenige der beiden Fluide ist, das auf dem niedrigeren Druck ist.

36. Wärmetauscher nach Anspruch 34 oder 35, **dadurch gekennzeichnet, daß** die ersten im wesentlichen rohrförmigen Durchgänge (32) vertikal gerichtet sind und die Hülle mit Haltern (61) fest verbunden ist, die nach innen vorstehen, um unter Schultern (62) einzutreten, die auf seitlichen Laschen (34) der Module des Bündels gebildet sind.

## Claims

1. Heat exchange bundle comprising modules each comprising two sheets (1, 2) welded along longitudinal lines (6) defining between them first passages (32) of substantially tubular shape, for a first exchange fluid, these modules being positioned with respect to each other in such a way as to define, between the modules, second passages for a second exchange fluid, the bundle comprising distributer means (42, 72) for distributing the first fluid in the first passages (32) and the second fluid in the second passages, **characterized in that** the modules are positioned in such a way that the external crests of the undulations of the adjacent modules are substantially in mutual contact, **in that** the modules comprise, at least at one of the ends of the bundle, a transition zone (13) defining first transition passages (33) through which the first substantially tubular passages (32) are in communication with a terminal orifice (40) of the module, and **in that** the transition zones (13) of the adjacent modules form between them, as distributer means for the second fluid, second transition passages (46) through which second substantially tubular passages, formed for the second fluid between the lines of contact or quasi-contact (98) of the external crests of the undulations of the adjacent modules, are in communication with each other and with the exterior of the bundle.

2. Exchange bundle according to Claim 1, **characterized in that** the first transition passages (33) are arranged such that the head loss is substantially the same between a terminal orifice (40) of the module and each substantially tubular first passage (32).

3. Exchange bundle according to Claim 1 or 2, **characterized in that** the modules are less thick in at least a section (72) of the transition zone (13) than in the undulating zone defining the first tubular passages, thereby to define, for the second fluid, between the transition zones (13) of the adjacent modules, said second transition passages emerging on each side of the bundle.

4. Heat exchange bundle according to Claim 1 or 2, **characterized in that** the transition zone (13) of each module comprises a terminal region (74) adjacent to the terminal orifice (40) and an intermediate region (72) disposed between the terminal region (74) and the undulated zone, and **in that** this intermediate region (72) is less thick than the said terminal region (74) and than the undulated zone, thereby to define, between the intermediate regions (72) of the adjacent modules, said second transition passages for the second fluid.

5. Heat exchange bundle according to one of Claims 1-4, **characterized in that** the transition zone (13) of each module is defined by a pocket between the two sheets of the module, and **in that** the pocket is in communication with the first substantially tubular passages.

6. Exchange bundle according to one of Claims 1-5, **characterized in that** the first transition passage (33) has, across the width of the module, a dimension which progressively decreases from the undulated zone where the longitudinal lines of laser welding (6) are located to the terminal orifice (40) of the module.

7. Exchange bundle according to Claim 5 or 6, **characterized by** weld spots (14) between the two sheets (1, 2) in the transition zone (13).

8. Exchange bundle according to Claim 7, **characterized in that** the weld spots (14) are distributed in a region with widely spaced weld spots (74) in the vicinity of the terminal orifice (40) and a region of close weld spots (72) between the region of widely spaced weld spots (74) and the first passages (32).

9. Exchange bundle according to Claim 8, **characterized in that** the region of close weld spots (72) has a generally arched shape about the centre (45) of the terminal orifice (40), and the ends (73) of the weld beads defining the substantially tubular passages are distributed along a line (78) arched about the centre (45) of the terminal orifice (40).

10. Heat exchange bundle according to Claim 8 or 9, **characterized in that** the thickness (e3) of the module is smaller in the region of close spots (72) than in the zone of the substantially tubular passages, thereby to define, for the second fluid, second transition passages between the regions of close weld spots (72) of the adjacent modules.

11. Heat exchange bundle according to one of Claims 7-10, **characterized in that** the weld spots are distributed according to a staggered arrangement which the ends (73) of the longitudinal weld lines are part of.

12. Heat exchange bundle according to one of Claims 1-10, **characterized in that** the ends (73) of the longitudinal weld lines are part of a staggered arrangement.

13. Heat exchange bundle according to one of Claims 1-12, **characterized in that** the transition zone is delimited on the side remote from the terminal orifice (40) by the ends (73) of the longitudinal weld lines arranged in an arched line (78) about the centre (45) of the terminal orifice.

14. Heat exchange bundle according to Claim 13, **characterized in that** the arched line (78) has ends (79) curved in the direction away from the terminal orifice (40).

15. Heat exchange bundle according to one of Claims 1-14, **characterized in that** the distributer means comprise, at least at one of the ends of the modules:
- an end plate (42), also being part of the positioning means, traversed by openings (41) in each of which is fixed, in a fluid-tight manner, a terminal orifice (40) of a respective one of the modules;
- a connection box (68), attached to the plate in such a way that the inside of the box is in communication with the first passages through the openings of the plate.

16. Bundle according to Claim 15, **characterized in that** the two sheets of each module are connected together by strengthening welds (94) substantially aligned with the longitudinal ends of the terminal orifice (40) of the module.

17. Heat exchange bundle according to Claim 16, **characterized in that** a drainage channel (96) is formed between each strengthening weld (94) and an edge of the internal space of the module.

18. Bundle according to one of Claims 15-17, **characterized in that** the end plate (42) has, parallel with the width of the modules, a dimension (43) which is smaller than the width of the modules, in order to leave clear, on each side of the plate, a path for the access of the second fluid to the second passages.

19. Exchange bundle according to one of Claims 1-18, **characterized in that** at least at one of the ends of each module the sheets (1, 2) form suspension lugs (34) for the modules on each side of the transition passage (33).

20. Heat exchange bundle according to Claim 19, **characterized in that** the lugs form a shoulder (62) intended to rest on a support bar (61) for the suspension of the module with the longitudinal ducts (32) oriented vertically.

21. Heat exchange bundle according to one of Claims 1-20, **characterized in that** the distance between the adjacent longitudinal lines (6) is less than or substantially equal to 30 mm.

22. Method of joining two sheets together by a laser weld bead, in order to manufacture a heat exchange module for a bundle according to one of Claims 1-21, **characterized in that** the weld is formed through a window (22) of a pressing device which presses the two sheets (1, 2) in mutual contact during the formation of the weld.

23. Method according to Claim 22, **characterized in that** there is formed, in a quasi-simultaneous manner, several parallel elementary weld beads intended to become part of several parallel weld lines.

24. Method according to Claim 23, **characterized in that** the distance between the weld beads is less than or substantially equal to 30 mm.

25. Method according to Claim 23 or 24, **characterized in that** the window (22) is part of a mobile pressing device (16) which is positioned relative to the edge of the sheets (1, 2), and **in that** the pressing device furthermore comprises force application means (18) which apply a pressing force on the pressing device (16) during the formation of the elementary beads (23, 24) and release the pressing effort whilst the sheets (1, 2) move with respect to the pressing device (16) in order to place opposite the window (22) the location of another elementary weld bead (23) to be produced.

26. Method according to one of Claims 23-25, **characterized in that** the pressing device (16) is a comb defining several parallel long-shaped windows (22) for producing, in each position of the sheets (1, 2) with respect to the pressing device (16), several elementary parallel beads (23) intended to form part of several parallel longitudinal weld lines (6) connecting the two sheets (1, 2).

27. Method of manufacturing a heat exchange module, in particular for a heat exchange bundle according to one of Claims 1-21, in which two sheets (1, 2) are joined together by parallel longitudinal weld beads (6), and by a closing weld bead (3) which is at least partial at each end, and then between the sheets (1, 2) there is introduced a liquid under pressure in order to separate the sheets from one another, by hydroforming, between the weld beads, **characterized in that** the closing weld bead is formed at a distance from the end of the longitudinal weld beads thereby to cause appearance of a transition passage (33) between the end of the module and the longitudinal ducts (32) which are formed between the longitudinal weld beads (6).

28. Method according to Claim 27, **characterized in that** the transition passage (33) is given a shape which narrows, in the direction of the width of the sheets, from the longitudinal weld beads (6) towards the end of the module.

29. Method according to Claim 27 or 28, **characterized in that** the two sheets (1, 2) are welded to one another at spots (14) in the transition passage (33).

30. Method according to Claim 29, **characterized in that**, after the hydroforming, the end of the bundle is cut along a line (39) separated from the weld spots (14) thereby to define a terminal orifice (40) of the module.

31. Method according to one of Claims 27-29, **characterized in that**, after the hydroforming, the end of the bundle is cut thereby to define a terminal orifice (40) of the module at a distance from the end of the longitudinal weld beads (6).

32. Method according to one of Claims 27-31, **characterized in that**, during the hydroforming, the two sheets (1, 2) are placed between surfaces (26, 27, 28, 29) which limit the expansion of the module in the direction of the thickness, these surfaces defining for the module a smaller thickness in a zone (9) of the end of the module than in a central zone (8) covering the major part of the length of the module.

33. Method according to Claim 32, **characterized in that**, in order to define the said smaller thickness, a spacer (31) is placed against at least one of the surfaces (26, 27) defining between them the maximum thickness permitted for the central zone (8).

34. Heat exchanger comprising a bundle according to one of Claims 1-21 in a cover (59) whose internal volume is in communication with the second passages.

35. Exchanger according to Claim 34, **characterized in that** the fluid bathing the internal volume and the second passages is that one of the two fluids which is at the lowest pressure.

36. Exchanger according to Claim 34 or 35, **characterized in that** the longitudinal ducts (32) are oriented vertically and the cover is integral with supports (61) protruding towards the interior in order to engage under shoulders (62) defined on lateral lugs (34) of the modules of the bundle.
